# FASCICULE DE BREVET EUROPEEN

(11) **EP 1 088 838 B1**
(45) Date de publication et mention de la délivrance du brevet: **23.02.2005**
(21) Numéro de dépôt: 00402691.0
(22) Date de dépôt: 29.09.2000
(51) Int. Cl.: C08G 12/38

(54) **Procédé de fabrication de résines aqueuses aminoplastes, lesdites résines et leur utilisation comme colles dans la fabrication de matériaux dérivés du bois ainsi que matériaux dérivés du bois résultants**
Verfahren zur Herstellung von wässrigen Aminoplastharzen, ihre Verwendung als Klebstoffe für Holzwerkstoffe und daraus hergestellte Holzwerkstoffe
Process for preparing aqueous aminoplast resins, their use in adhesives for wood products and the obtained wood products

(30) Priorité: 01.10.1999 FR 9912304
(43) Date de publication de la demande: 04.04.2001
(73) Titulaire: ARKEMA, 92800 Puteaux (FR)
(72) Inventeur: Lalo, Jack, 31400 Toulouse (FR)
(74) Mandataire: Rieux, Michel

(56) Documents cités:
- EP-A- 0 322 297
- EP-A- 0 913 411
- US-A- 3 488 310
- US-A- 4 536 245

## Description

La présente invention porte sur un procédé de fabrication de résines aqueuses aminoplastes à base d'urée, de formol et de mélamine, sur les résines susceptibles d'être obtenues par ce procédé, sur l'utilisation desdites résines en tant que colles dans la fabrication de produits dérivés du bois, ainsi que sur les matériaux dérivés du bois obtenus avec utilisation de ces colles.

Dans l'industrie du bois, il est bien connu d'utiliser des résines aqueuses aminoplastes à base d'urée, de formol et de mélamine pour le collage de fragments de bois, comme les copeaux de bois et les fibres de bois, afin d'obtenir les matériaux dérivés du bois correspondants que sont les panneaux de particules et les panneaux de fibres.

Industriellement, les fragments de bois sont transportés sur un tapis roulant sur lequel ils sont imprégnés et agglutinés par la colle également déversée sur le tapis roulant, afin d'obtenir des panneaux préformés devant répondre à des caractéristiques prédéterminées. Ces panneaux sont ensuite soumis à un pressage à chaud pour terminer leur fabrication.

On voit donc que les colles doivent répondre à un certain nombre de conditions qui auront une influence à tel ou tel stade de la chaîne de fabrication :
- d'abord, la fabrication proprement dite de la colle, dont on cherche naturellement à améliorer la productivité ;
- le stockage et le transport de la colle jusqu'à son point de mise en oeuvre ;
- ensuite, la fabrication des panneaux préformés ; et
- enfin la mise sous presse finale devant conduire aux panneaux de particules et similaires, prêts à être commercialisés.

Le procédé de fabrication de la résine est important car, de lui, dépend le comportement de ladite résine.

D'une manière générale, les propriétés visées de mise en oeuvre de ces colles sont une réactivité élevée ainsi qu'une viscosité peu élevée pour une teneur en matières solides élevée, pour parvenir à des cycles opératoires courts, en particulier à des temps de pressage courts. De plus, les colles doivent pouvoir être stockées pendant la plus longue durée possible, sans voir changer leurs propriétés.

De plus, la colle faisant partie intégrante des produits finis (panneaux) et ayant donc une influence sur les propriétés mécaniques de ceux-ci, il est donc également normal de prendre en considération les caractéristiques mécaniques telles que :
- la résistance à l'humidité mesurée par le gonflement des panneaux après immersion dans l'eau, qui doit être la plus faible possible ; et
- la résistance à la traction perpendiculaire et à la flexion, qui doivent être les plus élevées possible,
ainsi que la caractéristique du formol perforateur (traduisant les émanations de formol), lequel doit être le plus faible possible.

De plus, tout au long de la chaîne de fabrication, l'émanation de formol doit être la plus faible possible, aussi bien au cours du procédé de préparation de la colle que pendant son stockage et son transport, puis au cours de la fabrication de panneaux. Cependant, il faut garder à l'esprit que si l'on diminue la quantité de formol mise en oeuvre, la réactivité, et dans certains cas la stabilité, des résines diminue et les propriétés mécaniques des produits finis se dégradent.

Les panneaux de particules et similaires obtenus à l'aide de résines aminoplastes à base d'urée, de formol et de mélamine ont de bonnes propriétés mécaniques et, en particulier, une bonne résistance à l'eau et présentent l'avantage complémentaire que les panneaux de particules ou similaires résultants ne foncent pas.

Les résines urée-formol contenant de la mélamine peuvent être scindées en deux groupes : les résines contenant de faibles taux de mélamine, connues sous le nom de résines urée-formol dopées à la mélamine, et les résines contenant des quantités importantes de mélamine, appelées résines mélamine-urée-formol. Ces dernières sont destinées de préférence à la fabrication de matériaux présentant de bonnes résistances à l'humidité.

Dans la littérature, on trouve deux groupes de brevets qui se démarquent dans leurs revendications et surtout dans leurs exemples d'application, par le taux de mélamine contenu dans les résines.
- Le brevet américain US-A-4 536 245 décrit un procédé en deux étapes qui s'applique en priorité à des résines à faible teneur en mélamine. Dans l'étape initiale, l'urée et une petite quantité de mélamine sont méthylolées en milieu alcalin. Dans la deuxième étape, avec le reste d'urée et de mélamine, la réaction de condensation est réalisée en milieu neutre. Dans les exemples décrits dans le brevet, il est bien montré que, lorsque le taux de mélamine est plus élevé, le pH de la condensation l'est aussi. Pour un taux de mélamine de 8% en poids, le pH de la condensation est compris entre 7 et 7,2.
   Le brevet américain US-A-4 497 905 décrit la préparation de résines aminoplastes destinées à la fabrication de panneaux de particules à très faible niveau de dégagement de formol. Le procédé comprend une première étape dans laquelle le formaldéhyde et l'urée sont condensés en milieu acide et une deuxième étape dans laquelle de l'urée et de la mélamine sont ajoutées et condensées en milieu faiblement basique. Dans une troisième étape, de l'urée est ajoutée de telle sorte que le rapport molaire final F/NH₂ soit compris entre 0,3 et 0,5. La quantité de mélamine dans ce procédé ne dépasse pas 10% en poids par rapport à la résine telle quelle.
   Le brevet américain US-A-5 008 365 décrit un procédé de fabrication de résines aminoplastes, dont le taux de mélamine n'excède pas 10% en poids par rapport à la résine telle quelle. Dans ce procédé, la mélamine est introduite dès le départ et la condensation est réalisée à un pH inférieur à 7.
   La demande de brevet allemand DE-A-3 116 547 décrit un procédé de préparation de résines aminoplastes par mélange d'une résine urée-formol préparée de manière classique et d'un condensat mélamine-formol réalisé à pH = 8,7. Les revendications de cette demande sont de large portée puisqu'elles couvrent une fourchette de rapport molaire F/NH₂ de 0,4 à 0,85 et une fourchette de taux de mélamine de 0 à 21% en poids. Cependant, les exemples montrent que les résines ciblées sont des résines urée-formol faiblement dopées à la mélamine. Dans l'Exemple comparatif 2 de cette demande de brevet allemand, la mélamine, l'urée et le formol sont condensés à pH inférieur à 7, mais le taux de mélamine de cette résine est de 2,5% en poids par rapport à la résine finale.
- Les résines mélamine urée-formol qui se caractérisent par un taux de mélamine plus important peuvent être obtenues par mélange de condensat urée-formol et de condensat mélamine-formol. (brevet français FR-A-1 319 269, demandes de brevets allemands DE-A-2 422 650, DE-A-2 422 803, demande de brevet européen EP-A-52 212, demande de brevet allemand DE-A-3 116 547).

Elles peuvent également être obtenues par un procédé en deux étapes. Dans une première étape, la mélamine et le formol réagissent pour former un condensat, lequel est converti, dans une deuxième étape, avec de l'urée en produit de condensation mélamine-urée-formol (US-A-4 123 579).

Un autre procédé en deux étapes consiste, dans un premier temps, à faire réagir l'urée et le formol en milieu légèrement acide pour former un produit de condensation, puis, dans un second temps, à ajouter de la mélamine en milieu basique, ce qui permet d'obtenir après condensation une résine mélamine-urée-formol (demande de brevet allemand DE-A-2 455 420).

Dans le brevet américain US-A-5 681 917, il est décrit un procédé de préparation d'une résine mélamine-urée-formol à très bas taux de formol, dans lequel l'urée et le formol réagissent en milieu alcalin, puis en milieu acide. Du formol et de la mélamine sont ensuite ajoutés en milieu neutre. Après un temps de réaction conditionné par une valeur de viscosité, de la mélamine est ensuite ajoutée. La réaction est alors poursuivie dans les mêmes conditions jusqu'à un nouveau test d'arrêt ; de l'urée est ensuite ajoutée.

Le produit de condensation mélamine-urée-formol peut également être préparé directement par réaction entre l'urée, la mélamine et le formol, des solutions aqueuses concentrées de formol et d'urée pouvant être également utilisées à cet effet. (brevet américain US-A-3 891 590). Ce même type de procédé est décrit pour la préparation de résine mélamine-urée-formol (demande de brevet européen EP-A-185 205), obtenue par mélange du produit de condensation mélamine-urée-formol et d'urée. L'optimisation du rapport entre la quantité d'urée post ajoutée et la quantité totale d'urée (demande internationale WO 95/20 000) ou du rapport molaire mélamine sur urée (demande de brevet allemand DE-A-19 532 719) permettent d'obtenir des résines mieux adaptées à leurs conditions d'utilisation.

Dans les procédés en une seule étape, la condensation est réalisée en milieu alcalin ou faiblement alcalin.

Recherchant à améliorer encore les propriétés de mise en oeuvre et les propriétés mécaniques des résines aminoplastes mélamine-urée-formol, la Société déposante a découvert un nouveau procédé de préparation desdites résines mélamine-urée-formol à taux de mélamine intermédiaire, qui se caractérise par une condensation de la mélamine, de l'urée et du formol en une seule étape, mais, contrairement à ce qui est connu, à un pH faiblement acide, en faisant suivre par une phase d'addition de l'urée en présence de borax. Les résines ainsi produites, destinées à la fabrication de panneaux de particules ou de panneaux de fibres, présentent une bonne stabilité et une bonne réactivité en presse. Elles permettent d'obtenir des panneaux à très faible dégagement de formol avec de bonnes propriétés physico-mécaniques.

La présente invention a donc d'abord pour objet un procédé de fabrication de résines aqueuses mélamine-urée-formol, stables, avec un rapport molaire formol sur groupements NH₂ (F/NH₂) compris entre 0,3 et 0,6 et un taux de mélamine ramené à la masse de résine totale compris entre 10 et 16% en poids, caractérisé par le fait qu'il comprend les étapes consistant à :
(a) préparer un mélange en milieu aqueux de formaldéhyde, d'urée et de mélamine avec un rapport molaire F/NH₂ compris entre 0,9 et 1,2 ;
(b) faire réagir ledit mélange dans des conditions légèrement acides, à un pH compris entre 6 et 6,8 ;
(c) arrêter la phase de condensation par addition d'au moins un agent basique en quantité suffisante pour amener le pH du mélange à une valeur comprise entre 7 et 7,4, et de borax en quantité suffisante pour amener le pH du mélange à une valeur comprise entre 8 et 8,6 ;
(d) ajouter l'urée nécessaire pour parvenir au rapport molaire F/NH₂ de la résine finale, cette urée étant introduite à une température comprise entre 50 et 80°C, pendant une durée comprise entre 20 et 60 minutes, la quantité de borax introduite à l'étape (c) ayant été calculée de telle sorte que la valeur du pH ne descende pas en-dessous de 7,8 pendant la durée de cette phase ; et
(e) refroidir le mélange réactionnel et, si nécessaire, réajuster le pH à une valeur comprise entre 8,6 et 9,2,
lesdits groupements NH₂ indiqués dans toutes les étapes ci-dessus comprenant les moles d'urée et les moles de mélamine.

On va maintenant décrire des modes de réalisation particuliers ou préférés pour les différentes étapes du procédé ci-dessus.

### Etape (a)

A cette étape, on prépare un mélange en milieu aqueux de formaldéhyde, d'urée et de mélamine avec un rapport molaire F/NH₂ compris entre 0,9 et 1,2, de préférence entre 1 et 1,1.

On peut introduire au moins une partie de l'urée et du formol sous la forme d'un précondensat urée/formol. Les concentrations en urée et en formol de ce précondensat peuvent varier suivant les conditions opératoires, étant par exemple de respectivement environ 20% et 50 % en poids. A titre d'exemple, on peut préparer ledit précondensat en préparant un mélange urée-formol de rapport molaire F/NH₂ compris entre 2 et 6, en milieu aqueux, en ajustant le pH à une valeur comprise entre 7 et 8,3, puis en chauffant au reflux pendant une durée pouvant aller jusqu'à 15 minutes en maintenant le pH au-dessus de 5,9 et/ou pendant une durée pouvant aller jusqu'à 30 minutes à un pH compris entre 4 et 6,5.

On peut également introduire au moins une partie du formol sous la forme d'une solution aqueuse, la mélamine pouvant être introduite dans ladite solution aqueuse.

Par ailleurs, on peut introduire une solution de formol dont la température est comprise entre 40 et 60°C.

La quantité d'urée nécessaire peut être ajoutée avant et/ou après l'addition de mélamine.

Par ailleurs, à cette étape, on ajuste le pH de la phase préparée à une valeur supérieure à 7, de préférence comprise entre 7 et 7,8, la modification du pH étant réalisée par exemple par addition d'au moins un agent basique choisi parmi les hydroxydes de métaux alcalins en solution aqueuse, tels que les hydroxydes de sodium, de lithium et de potassium, et les amines organiques, comme la triéthanolamine. On peut notamment utiliser comme agent basique une solution aqueuse de soude dont le titre est compris entre 5 et 50% en poids, de préférence de l'ordre de 20% en poids.

### Etape (b)

Dans cette phase, le pH descend de lui-même à une valeur comprise entre 6 et 6,8. L'addition de soude en solution aqueuse ou d'un autre agent basique comme il est décrit dans l'étape précédente (a) peut être utilisée pour maintenir le pH à une valeur constante comprise entre 6 et 6,8, en particulier entre 6,2 et 6,6.

La température dans cette phase est comprise entre 70 et 90°C et sa valeur dépendra des autres paramètres, pH, taux de mélamine, rapport molaire F/NH₂, et devra être compatible avec un suivi possible de la réaction de condensation.

Cette dernière pourra se faire par la mesure de la viscosité. Les valeurs de viscosité en fin de condensation dépendent des conditions opératoires et notamment de la concentration en matières actives dans cette phase.

Ainsi, on conduira avantageusement la condensation de l'étape (b) jusqu'à ce qu'un test d'arrêt soit atteint, dont la valeur dépend de la concentration en matières actives du milieu et de la viscosité de la résine terminée. A titre indicatif, la viscosité à 20°C de la résine terminée se situe de préférence entre 100 et 1000 mPa.s pour un extrait sec de 65% en poids.

### Etape (c)

L'addition de borax précédée d'une addition de solution aqueuse de soude ou d'un autre agent basique comme il est défini dans l'étape (a) permet d'arrêter la réaction de condensation par augmentation du pH à une valeur comprise entre 8 et 8,6. Le milieu réactionnel est refroidi à la température choisie pour l'addition d'urée c'est-à-dire comprise entre 50 et 80°C.

A cette étape, on ajoute généralement le borax dans une quantité telle que le taux de borax dans la résine finale est de 0,05 à 0,5% en poids.

Après l'arrêt de la phase de condensation de l'étape (c), on refroidit le milieu réactionnel jusqu'à une température comprise entre 50 et 80°C.

### Etape (d)

L'urée est ajoutée au milieu réactionnel en quantité telle que le rapport molaire F/NH₂ atteint soit celui de la résine terminée, c'est-à-dire compris entre 0,3 et 0,6. Dans cette phase, il est nécessaire de chauffer le milieu réactionnel pour le maintenir à la température voulue car la dissolution de l'urée est endothermique. Durant cette phase, l'urée réagit avec le formol encore disponible. Le réarrangement permet une meilleure stabilité de la résine pendant le stockage ultérieur.

### Etape (e)

La résine est refroidie en particulier à la température de 20°C et la valeur du pH est remontée si nécessaire à une valeur comprise entre 8,6 et 9,2 par addition d'une solution aqueuse de soude ou d'un agent basique comme il est décrit dans l'étape (a).

On conduit les étapes (a) à (e) de manière à obtenir une résine finale dont l'extrait sec est de préférence compris entre 60 et 70% en poids. L'extrait sec est la perte de poids mesurée après passage à l'étuve à 120°C pendant 2 heures d'un gramme de résine placé dans une coupelle en aluminium.

La présente invention a également pour objet une résine aqueuse aminoplaste mélamine-urée-formol, stable, avec un rapport molaire formol sur groupements NH₂(F/NH₂) compris entre 0,3 et 0,6 et un taux de mélamine ramené à la masse de résine totale compris entre 10 et 16% en poids, ladite résine étant susceptible d'être obtenue par le procédé tel que défini ci-dessus.

La présente invention porte également sur l'utilisation de la résine aqueuse aminoplaste obtenue ou susceptible d'être obtenue par le procédé ci-dessus décrit, en tant que colle dans la fabrication de produits dérivés du bois, et elle porte également sur les matériaux dérivés du bois obtenus avec l'utilisation, comme colle, de ladite résine aqueuse aminoplaste, obtenue ou susceptible d'être obtenue par le procédé décrit ci-dessus.

Les Exemples suivants illustrent la présente invention sans toutefois en limiter la portée. Dans ces Exemples, les pourcentages sont en poids sauf indication contraire.

### EXEMPLE 1

Dans un réacteur muni d'un agitateur à ancre et surmonté d'un réfrigérant, 1046 g d'un précondensat urée-formol (F = 50,35% et U = 19,28%) et 128,5 g d'urée sont introduits. La valeur du pH est ajustée à 7,2 par addition d'une solution aqueuse de soude à 20%. 240 g de mélamine et 130 g d'eau sont ensuite ajoutés au mélange.

Le milieu réactionnel est chauffé à la température de 90°C pendant 10 minutes, puis à 80°C. La valeur du pH est maintenue à 6,5 par addition de soude si nécessaire.

La réaction de condensation est suivie par la mesure de la viscosité à 25°C. Dès que sa valeur a atteint 800 mPa.s, le pH est remonté à 7,4 par addition de soude et le mélange réactionnel est refroidi à la température de 70°C. 4 g de borax sont ajoutés, puis 456 g d'urée. La température est maintenue à 70°C pendant l'introduction de l'urée. La durée de cette phase est de quarante minutes.

Le milieu réactionnel est ensuite refroidi à 20°C.

Les caractéristiques de la résine sont les suivantes :

| | |
|---|---|
| Masse volumique | 1294 kg/m³ |
| | |
| Extrait sec (2 heures à l'étuve à 120°C sur 1 g de résine capsule aluminium) | 66 % |
| | |
| Viscosité à 20°C | 300 mPa.s |
| | |
| Temps de gel à 80°C (NH₄Cl : 1 ml de solution aqueuse à 150 g/l ; résine : 10 g) | 260 s |
| | |
| Temps de gel à 100°C (NH₄Cl : 1 ml de solution aqueuse à 150 g/l ; résine : 10 g) | 78 s |
| | |

| STABILITÉS | |
|---|---|
| 20°C | 60 jours |
| | |
| 30°C | 25 jours |

### EXEMPLE 2

Dans un réacteur muni d'un agitateur à ancre et surmonté d'un réfrigérant à reflux, 966 g d'un précondensat urée formol (F = 50,35% et U = 19,28%) et 105,6 g d'urée sont introduits à température ambiante. La valeur du pH est ajustée à 7,2 par addition d'une solution aqueuse de soude à 20%. 240 g de mélamine et 122 g d'eau sont ensuite ajoutés au mélange.

Le milieu réactionnel est chauffé à la température de 90°C pendant 10 minutes puis à 80°C. La valeur du pH est maintenue à 6,5 par addition de soude si nécessaire.

La réaction de condensation est suivie par la mesure de la viscosité à 25°C. Dès que sa valeur a atteint 600 mPa.s, le pH est remonté à 7,4 par addition de soude et le mélange réactionnel est refroidi à la température de 70°C. 4 g de borax sont ajoutés, puis 572 g d'urée. La température est maintenue à 70°C pendant l'introduction de l'urée. La durée de cette phase est de quarante minutes.

Les caractéristiques de la résine sont les suivantes :

| | |
|---|---|
| Masse volumique | 1294 kg/m³ |
| | |
| Extrait sec (2 heures à l'étuve à 120°C sur 1 g de résine capsule aluminium) | 65,9 % |
| | |
| Viscosité à 20°C | 225 mPa.s |
| | |
| Temps de gel à 80°C (NH₄Cl : 1 ml de solution aqueuse à 150 g/l ; résine : 10 g) | 450 s |
| | |
| Temps de gel à 100°C (NH₄Cl : 1 ml de solution aqueuse à 150 g/l ; résine : 10 g) | 112 s |
| | |

| STABILITÉS | |
|---|---|
| 20°C | 60 jours |
| | |
| 30°C | 20 jours |

### EXEMPLE COMPARATIF 1

Dans un réacteur muni d'un agitateur à ancre et surmonté d'un réfrigérant, 1064,7 g de précondensat urée formol (F = 49,6% ; U = 20,5%) et 113,3 g d'urée sont introduits à température ambiante. La valeur du pH est ajustée à 8 par addition d'une solution aqueuse de soude à 20%. 240 g de mélamine et 130 g d'eau sont ensuite ajoutés au mélange.

Le milieu réactionnel est chauffé à la température de 90°C pendant 10 minutes, puis à 80°C. La valeur du pH est maintenue à 7,2 par addition de la solution de soude. La réaction de condensation est suivie par la mesure de la viscosité à 25°C. Dès que sa valeur a atteint 650 mPa.s, le pH est remonté à 8 par addition de soude. 457 g d'urée sont ajoutés dans la phase de refroidissement à la température de 60°C. L'endotherme de la dissolution de l'urée accélère la vitesse de refroidissement de la résine.

Les caractéristiques de la résine sont les suivantes :

| | |
|---|---|
| Masse volumique | 1297 kg/m³ |
| | |
| Extrait sec (2 heures à l'étuve à 120°C sur 1 g de résine capsule aluminium) | 65,9 % |
| | |
| Viscosité à 20°C | 285 mPa.s |
| | |
| Temps de gel à 80°C (NH₄Cl : 1 ml de solution aqueuse à 150 g/l ; résine : 10 g) | 285 s |
| | |
| Temps de gel à 100°C (NH₄Cl : 1 ml de solution aqueuse à 150 g/l ; résine : 10 g) | 78 s |
| | |

| STABILITÉS | |
|---|---|
| 20°C | 30 jours |
| | |
| 30°C | 8 jours |

### EXEMPLE COMPARATIF 2

Dans un réacteur muni d'un agitateur à ancre et surmonté d'un réfrigérant, 981 g de précondensat urée-formol (F = 49,6% ; U = 20,5%) et 91 g d'urée sont introduits à température ambiante. La valeur du pH est ajustée à 8 par addition d'une solution aqueuse de soude à 20%. 240 g de mélamine et 123 g d'eau sont ensuite ajoutés au mélange.

Le milieu réactionnel est chauffé à la température de 90°C pendant 10 minutes, puis à 80°C. La valeur du pH est maintenue à 7,2 par addition la solution de soude. La réaction de condensation est suivie par la mesure de la viscosité à 25°C. Dès que sa valeur a atteint 600 mPa.s, le pH est remonté à 8 par addition de soude. 571 g d'urée sont ajoutés pendant la phase de refroidissement à la température de 60°C. L'endotherme de dissolution de l'urée accélère la vitesse de refroidissement de la résine.

Les caractéristiques de la résine sont les suivantes :

| | |
|---|---|
| Masse volumique | 1293 kg/m³ |
| | |
| Extrait sec (2 heures à l'étuve à 120°C sur 1 g de résine capsule aluminium) | 66,3 % |
| | |
| Viscosité à 20°C | 200 mPa.s |
| | |
| Temps de gel à 80°C (NH₄Cl : 1 ml de solution aqueuse à 150 g/l ; résine : 10 g) | 480 s |
| | |
| Temps de gel à 100°C (NH₄Cl : 1 ml de solution aqueuse à 150 g/l ; résine : 10 g) | 120 s |
| | |

| STABILITÉS | |
|---|---|
| 20°C | 30 jours |
| | |
| 30°C | 10 jours |

### EXEMPLE COMPARATIF 3

Dans un réacteur muni d'un agitateur à ancre et surmonté d'un réfrigérant, 1032 g de précondensat urée-formol (F = 50,4% ; U = 19,5%) et 65,5 g d'urée sont introduits à température ambiante. La valeur du pH est ajustée à 8,5 par addition d'une solution aqueuse de soude à 20%. 320 g de mélamine et 141 g d'eau sont ensuite ajoutés au mélange.

Le milieu réactionnel est chauffé à la température de 90° C, la valeur du pH est maintenue au-dessus de 7,8 par addition de soude. La réaction de condensation est suivie par la mesure de la viscosité à 25°C. Dès que sa valeur a atteint 800 mPa.s, le milieu réactionnel est mis en refroidissement. 450 g d'urée sont ajoutés à la température de 60°C. L'endotherme de dissolution de l'urée accélère la vitesse de refroidissement de la résine.

Les caractéristiques de la résine sont les suivantes :

| | |
|---|---|
| Masse volumique | 1297 kg/m³ |
| | |
| Extrait sec (2 heures à l'étuve à 120°C sur 1 g de résine capsule aluminium) | 65 % |
| | |
| Viscosité à 20°C | 200 mPa.s |
| | |
| Temps de gel à 100°C (NH₄Cl : 1 ml de solution aqueuse à 150 g/l ; résine : 10 g) | 60 s |

### EXEMPLE 4

Les résines de l'Exemple 1 et de l'Exemple Comparatif 3 ont été utilisées pour faire une série de panneaux de fibres (MDF) de 7,7 mm d'épaisseur. Les résultats décrits dans le Tableau 1 ci-après, montrent que la résine décrite dans l'Exemple 1 permet d'obtenir de bons panneaux que ce soit à taux d'encollage équivalent ou à taux de mélamine équivalent.

Les caractéristiques des panneaux ont été évaluées selon les normes suivantes (*à vérifier*) :
- Epaisseur (mm) : NF EN 324.1
- Masse volumique (kg/m³) : NF EN 323
- Traction perpendiculaire (N/mm²) : NF EN 319
- Gonflement V20 (%) (Gonflement pendant 24 heures dans l'eau à 20°C) : NF EN 317
- Humidité (%) : NF EN 322
- Formol perforateur : CEN-EN-120.

**TABLEAU 1**

| Exemple | 1 | Comparatif 3 | 1 | Comparatif 3 |
|---|---|---|---|---|
| Epaisseur des panneaux (mm) | 7,6 | 7,6 | 7,7 | 7,7 |
| Taux de paraffine % sec / Bois sec | 1 | 1 | 1 | 1 |
| Taux d'urée % /Résine Sèche | 6 | 6 | 12 | 12 |
| Taux de durcisseur % sec / Résine sèche (NH₄Cl) | 2 | 2 | 2 | 2 |
| Taux de mélamine dans le panneau % / Bois sec | 2,6 | 3,44 | 3,3 | 3,4 |
| Humidité (%) | 6,1 | 5,9 | 4,9 | 5,6 |
| Masse volumique (kg/m³) | 889 | 880 | 880 | 885 |
| Gonflement (%) 24h eau froide | 5,8 | 5,6 | 7 | 7,6 |
| Traction perpendiculaire (N/mm²) | >2 | >2 | >2 | >2 |
| Formol perforateur (mg/100g) | 11,4 | 11,9 | 6,6 | 7,2 |

## Revendications

1. Procédé de fabrication de résines aqueuses mélamine-urée-formol, stables, avec un rapport molaire formol sur groupements NH₂ (F/NH₂) compris entre 0,3 et 0,6 et un taux de mélamine ramené à la masse de résine totale compris entre 10 et 16% en poids, **caractérisé par le fait qu'**il comprend les étapes consistant à :
(a) préparer un mélange en milieu aqueux de formaldéhyde, d'urée et de mélamine avec un rapport molaire F/NH₂ compris entre 0,9 et 1,2 ;
(b) faire réagir ledit mélange dans des conditions légèrement acides, à un pH compris entre 6 et 6,8 ;
(c) arrêter la phase de condensation par addition d'au moins un agent basique en quantité suffisante pour amener le pH du mélange à une valeur comprise entre 7 et 7,4, et de borax en quantité suffisante pour amener le pH du mélange à une valeur comprise entre 8 et 8,6 ;
(d) ajouter l'urée nécessaire pour parvenir au rapport molaire F/NH₂ de la résine finale, cette urée étant introduite à une température comprise entre 50 et 80°C, pendant une durée comprise entre 20 et 60 minutes, la quantité de borax introduite à l'étape (c) ayant été calculée de telle sorte que la valeur du pH ne descende pas en-dessous de 7,8 pendant la durée de cette phase ; et
(e) refroidir le mélange réactionnel et, si nécessaire, réajuster le pH à une valeur comprise entre 8,6 et 9,2,
lesdits groupements NH₂ indiqués dans toutes les étapes ci-dessus comprenant les moles d'urée et les moles de mélamine.

2. Procédé selon la revendication 1, **caractérisé par le fait qu'**à l'étape (a), on prépare un mélange en milieu aqueux de formaldéhyde, d'urée et de mélamine avec un rapport molaire F/NH₂ compris entre 1 et 1,1.

3. Procédé selon l'une des revendications 1 et 2, **caractérisé par le fait qu'**à l'étape (a), on introduit au moins une partie de l'urée et du formol sous la forme d'un précondensat urée/formol.

4. Procédé selon l'une des revendications 1 à 3, **caractérisé par le fait qu'**à l'étape (a), on introduit au moins une partie du formol sous la forme d'une solution aqueuse.

5. Procédé selon la revendication 4, **caractérisé par le fait qu'**à l'étape (a), on introduit la mélamine dans la solution aqueuse de formol.

6. Procédé selon l'une des revendications 3 à 5, **caractérisé par le fait qu'**à l'étape (a), on introduit une solution de formol dont la température est comprise entre 40 et 60°C.

7. Procédé selon l'une des revendications 1 à 6, **caractérisé par le fait qu'**à l'étape (a), on ajoute la quantité d'urée nécessaire avant et/ou après l'addition de mélamine.

8. Procédé selon l'une des revendications 1 à 8, **caractérisé par le fait qu'**à l'étape (a), on ajuste le pH de la phase préparée à une valeur supérieure à 7, de préférence comprise entre 7 et 7,8, la modification du pH étant réalisée par addition d'au moins un agent basique choisi parmi les hydroxydes de métaux alcalins en solution aqueuse et les amines organiques.

9. Procédé selon la revendication 8, **caractérisé par le fait qu'**on utilise comme agent basique une solution aqueuse de soude dont le titre est compris entre 5 et 50% en poids.

10. Procédé selon l'une des revendications 1 à 9, **caractérisé par le fait qu'**à l'étape (b), on maintient la valeur de pH entre 6,2 et 6,6.

11. Procédé selon l'une des revendications 1 à 10, **caractérisé par le fait qu'**à l'étape (b), on maintient la valeur du pH par l'addition d'au moins un agent basique choisi parmi les hydroxydes de métaux alcalins en solution aqueuse et les amines organiques.

12. Procédé selon l'une des revendications 1 à 11, **caractérisé par le fait que** l'on conduit l'étape (b) à une température comprise entre 70 et 90°C.

13. Procédé selon l'une des revendications 1 à 12, **caractérisé par le fait que** l'on conduit la condensation de l'étape (b) jusqu'à ce qu'un test d'arrêt soit atteint, dont la valeur dépend de la concentration en matières actives du milieu et de la viscosité de la résine terminée.

14. Procédé selon la revendication 13, **caractérisé par le fait que** l'on conduit la condensation de l'étape (b) jusqu'à ce que la viscosité à 20°C de la résine terminée soit de 100-1000 mPa.s pour un extrait sec de 65% en poids.

15. Procédé selon l'une des revendications 1 à 14, **caractérisé par le fait qu'**à l'étape (c), on utilise un agent basique choisi parmi les hydroxydes de métaux alcalins en solution aqueuse et les amines organiques.

16. Procédé selon l'une des revendications 1 à 15, **caractérisé par le fait qu'**à l'étape (c), on ajoute le borax dans une quantité telle que le taux de borax dans la résine finale est de 0,05 à 0,5% en poids.

17. Procédé selon l'une des revendications 1 à 16, **caractérisé par le fait qu'**après l'arrêt de la phase de condensation de l'étape (c), on refroidit le milieu réactionnel jusqu'à une température comprise entre 50 et 80°C.

18. Procédé selon l'une des revendications 1 à 17, **caractérisé par le fait qu'**à l'étape (e), on refroidit le mélange réactionnel à une température de 20°C.

19. Procédé selon l'une des revendications 1 à 18, **caractérisé par le fait qu'**à l'étape (e), on effectue le réajustement du pH par addition d'au moins un agent basique choisi parmi les hydroxydes de métaux alcalins en solution aqueuse et les amines organiques.

20. Procédé selon l'une des revendications 1 à 19, **caractérisé par le fait que** l'on conduit les étapes (a) à (e) de manière à obtenir une résine finale dont l'extrait sec est compris entre 60% et 70% en poids.

21. Résine aqueuse aminoplaste mélamine-urée-formol, stable, avec un rapport molaire formol sur groupements NH₂ (F/NH₂) compris entre 0,3 et 0,6 et un taux de mélamine ramené à la masse de résine totale compris entre 10 et 16% en poids, ladite résine étant susceptible d'être obtenue par le procédé tel que défini à l'une des revendications 1 à 20.

22. Utilisation de la résine aqueuse aminoplaste telle que définie à la revendication 21 ou obtenue par le procédé tel que défini à l'une des revendications 1 à 20, en tant que colle dans la fabrication de produits dérivés du bois.

23. Matériaux dérivés du bois obtenus avec l'utilisation, comme colle, de la résine aqueuse aminoplaste telle que définie à la revendication 21 ou obtenue par le procédé tel que défini à l'une des revendications 1 à 20.

## Claims

1. Process for the manufacture of stable aqueous melamine-urea-formaldehyde resins with a molar ratio of formaldehyde to NH₂ groups (F/NH₂) of between 0.3 and 0.6 and a level of melamine, based on the total weight of resin, of between 10 and 16% by weight, **characterized in that** it comprises the stages consisting in:
(a) preparing a mixture in an aqueous medium of formaldehyde, of urea and of melamine with an F/NH₂ molar ratio of between 0.9 and 1.2;
(b) reacting the said mixture under slightly acidic conditions, at a pH of between 6 and 6.8;
(c) halting the condensation step by addition of at least one basic agent in an amount sufficient to bring the pH of the mixture to a value of between 7 and 7.4 and borax in an amount sufficient to bring the pH of the mixture to a value of between 8 and 8.6;
(d) adding the urea necessary to achieve the F/NH₂ molar ratio of the final resin, this urea being introduced at a temperature of between 50 and 80°C over a period of time of between 20 and 60 minutes, the amount of borax introduced in stage (c) having been calculated so that the value of the pH does not fall below 7.8 throughout the duration of this step; and
(e) cooling the reaction mixture and, if necessary, readjusting the pH to a value of between 8.6 and 9.2,
the said NH₂ groups indicated in all the above stages comprising the moles of urea and the moles of melamine.

2. Process according to Claim 1, **characterized in that**, in stage (a), a mixture in an aqueous medium of formaldehyde, of urea and of melamine with an F/NH₂ molar ratio of between 1 and 1.1 is prepared.

3. Process according to either of Claims 1 and 2, **characterized in that**, in stage (a), at least a portion of the urea and of the formaldehyde is introduced in the form of a urea/formaldehyde precondensate.

4. Process according to one of Claims 1 to 3, **characterized in that**, in stage (a), at least a portion of the formaldehyde is introduced in the form of an aqueous solution.

5. Process according to Claim 4, **characterized in that**, in stage (a), the melamine is introduced into the aqueous formaldehyde solution.

6. Process according to one of Claims 3 to 5, **characterized in that**, in stage (a), a formaldehyde solution having a temperature of between 40 and 60°C is introduced.

7. Process according to one of Claims 1 to 6, **characterized in that**, in stage (a), the amount of urea necessary is added before and/or after the addition of melamine.

8. Process according to one of Claims 1 to 8, **characterized in that**, in stage (a), the pH of the phase prepared is adjusted to a value of greater than 7, preferably of between 7 and 7.8, the modification to the pH being carried out by addition of at least one basic agent chosen from alkali metal hydroxides in aqueous solution and from organic amines.

9. Process according to Claim 8, **characterized in that** an aqueous sodium hydroxide solution with an assay of between 5 and 50% by weight is used as basic agent.

10. Process according to one of Claims 1 to 9, **characterized in that**, in stage (b), the pH value is maintained between 6.2 and 6.6.

11. Process according to one of Claims 1 to 10, **characterized in that**, in stage (b), the value of the pH is maintained by the addition of at least one basic agent chosen from alkali metal hydroxides in aqueous solution and from organic amines.

12. Process according to one of Claims 1 to 11, **characterized in that** stage (b) is carried out at a temperature of between 70 and 90°C.

13. Process according to one of Claims 1 to 12, **characterized in that** the condensation of stage (b) is carried out until a test on stopping is reached, the value of which depends on the concentration of active materials in the medium and on the viscosity of the finished resin.

14. Process according to Claim 13, **characterized in that** the condensation of stage (b) is carried out until the viscosity at 20°C of the finished resin is from 100 to 1000 mPa·s for a solids content of 65% by weight.

15. Process according to one of Claims 1 to 14, **characterized in that**, in stage (c), a basic agent chosen from alkali metal hydroxides in aqueous solution and from organic amines is used.

16. Process according to one of Claims 1 to 15, **characterized in that**, in stage (c), the borax is added in an amount such that the level of borax in the final resin is from 0.05 to 0.5% by weight.

17. Process according to one of Claims 1 to 16, **characterized in that**, after halting the condensation step of stage (c), the reaction medium is cooled to a temperature of between 50 and 80°C.

18. Process according to one of Claims 1 to 17, **characterized in that**, in stage (e), the reaction mixture is cooled to a temperature of 20°C.

19. Process according to one of Claims 1 to 18, **characterized in that**, in stage (e), the readjustment of the pH is carried out by addition of at least one basic agent chosen from alkali metal hydroxides in aqueous solution and from organic amines.

20. Process according to one of Claims 1 to 19, **characterized in that** stages (a) to (e) are carried out so as to obtain a final resin having a solids content of between 60% and 70% by weight.

21. Stable aqueous melamine-urea-formaldehyde aminoplast resin with a molar ratio of formaldehyde to NH₂ groups (F/NH₂) of between 0.3 and 0.6 and a level of melamine, based on the total weight of resin, of between 10 and 16% by weight, the said resin being capable of being obtained by the process as defined in one of Claims 1 to 20.

22. Use of the aqueous aminoplast resin as defined in Claim 21 or obtained by the process as defined in one of Claims 1 to 20 as adhesive in the manufacture of wood-derived products.

23. Wood-derived materials obtained with the use, as adhesive, of the aqueous aminoplast resin as defined in Claim 21 or obtained by the process as defined in one of Claims 1 to 20.

## Patentansprüche

1. Verfahren zur Herstellung wässriger stabiler Melamin-Harnstoff-Formol-Harze mit einem Molverhältnis von Formol zu NH₂-Gruppen (F/NH₂) zwischen 0,3 und 0,6 und einem Anteil von Melamin, bezogen auf die Harz-Gesamtmasse, zwischen 10 und 16 Gew.-%, **dadurch gekennzeichnet, dass** es die folgenden Schritte umfasst:
(a) Herstellen eines Gemischs in wässrigem Medium aus Formaldehyd, Harnstoff und Melamin mit einem Molverhältnis F/NH₂ zwischen 0,9 und 1,2,
(b) Umsetzen des Gemischs unter leicht sauren Bedingungen bei einem pH-Wert zwischen 6 und 6,8,
(c) Abstoppen der Kondensationsphase durch Zugabe von mindestens einem basischen Mittel in einer Menge, die ausreicht, um den pH-Wert des Gemisches auf einen Wert zwischen 7 und 7,4 zu bringen, und von Borax in einer Menge, die ausreicht, um den pH-Wert des Gemisches auf einen Wert zwischen 8 und 8,6 zu bringen,
(d) Zugeben des Harnstoffs, der benötigt wird, um das Molverhältnis F/NH₂ des endgültigen Harzes zu erreichen, wobei der Harnstoff bei einer Temperatur zwischen 50 und 80°C für eine Dauer zwischen 20 und 60 Minuten hinzugefügt wird, wobei die im Schritt (c) hinzugefügte Menge Borax derart berechnet wurde, dass für die Dauer dieser Phase der pH-Wert nicht unter 7,8 fällt, und
(e) Abkühlen des Reaktionsgemisches und, wenn nötig, Wiedereinstellen des pH bei einem Wert zwischen 8,6 und 9,2,
wobei die bei allen vorstehenden Schritten angegebenen NH₂-Gruppen die Mol Harnstoff und die Mol Melamin umfassen.

2. Verfahren nach Anspruch 1, **dadurch gekennzeichnet, dass** im Schritt (a) ein Gemisch in wässrigem Medium aus Formaldehyd, Harnstoff und Melamin mit einem Molverhältnis F/NH₂ zwischen 1 und 1,1 hergestellt wird.

3. Verfahren nach Anspruch 1 oder 2, **dadurch gekennzeichnet, dass** im Schritt (a) mindestens ein Teil des Harnstoffs und des Formols in Form eines Harnstoff/Formol-Präkondensats zugegeben wird.

4. Verfahren nach einem der Ansprüche 1 bis 3, **dadurch gekennzeichnet, dass** im Schritt (a) mindestens ein Teil des Formols in Form einer wässrigen Lösung zugegeben wird.

5. Verfahren nach Anspruch 4, **dadurch gekennzeichnet, dass** im Schritt (a) das Melamin in der wässrigen Lösung von Formol zugegeben wird.

6. Verfahren nach einem der Ansprüche 3 bis 5, **dadurch gekennzeichnet, dass** im Schritt (a) eine Lösung von Formol zugegeben wird, deren Temperatur zwischen 40 und 60°C beträgt.

7. Verfahren nach einem der Ansprüche 1 bis 6, **dadurch gekennzeichnet, dass** im Schritt (a) die benötigte Menge Harnstoff vor und/oder nach der Zugabe von Melamin zugegeben wird.

8. Verfahren nach einem der Ansprüche 1 bis 8, **dadurch gekennzeichnet, dass** im Schritt (a) der pH der hergestellten Phase auf einen Wert über 7, vorzugsweise zwischen 7 und 7,8, eingestellt wird, wobei die Veränderung des pH-Werts durch Zugabe mindestens eines basischen Mittels durchgeführt wird, das aus den Hydroxiden von Alkalimetallen in wässriger Lösung und den organischen Aminen ausgewählt ist.

9. Verfahren nach Anspruch 8, **dadurch gekennzeichnet, dass** als basisches Mittel eine wässrige Natriumhydroxidlösung verwendet wird, deren Gehalt zwischen 5 und 50 Gew.-% beträgt.

10. Verfahren nach einem der Ansprüche 1 bis 9, **dadurch gekennzeichnet, dass** im Schritt (b) der pH-Wert zwischen 6,2 und 6,6 gehalten wird.

11. Verfahren nach einem der Ansprüche 1 bis 10, **dadurch gekennzeichnet, dass** im Schritt (b) der pH-Wert durch Zugabe mindestens eines basischen Mittels beibehalten wird, das aus den Hydroxiden von Alkalimetallen in wässriger Lösung und den organischen Aminen ausgewählt ist.

12. Verfahren nach einem der Ansprüche 1 bis 11, **dadurch gekennzeichnet, dass** der Schritt (b) bei einer Temperatur zwischen 70 und 90°C durchgeführt wird.

13. Verfahren nach einem der Ansprüche 1 bis 12, **dadurch gekennzeichnet, dass** die Kondensation des Schrittes (b) durchgeführt wird, bis ein Abstopp-Test erreicht ist, dessen Wert von der Konzentration an aktiven Substanzen des Mediums und der Viskosität des fertigen Harzes abhängt.

14. Verfahren nach Anspruch 13, **dadurch gekennzeichnet, dass** die Kondensation des Schrittes (b) fortgesetzt wird, bis die Viskosität bei 20°C des fertigen Harzes 100 - 1000 mPa.s für einen Trockenextrakt von 65 Gew.-% beträgt.

15. Verfahren nach einem der Ansprüche 1 bis 14, **dadurch gekennzeichnet, dass** im Schritt (c) ein basisches Mittel verwendet wird, das aus den Hydroxiden von Alkalimetallen in wässriger Lösung und den organischen Aminen ausgewählt ist.

16. Verfahren nach einem der Ansprüche 1 bis 15, **dadurch gekennzeichnet, dass** im Schritt (c) Borax in einer derartigen Menge zugegeben wird, dass der Anteil von Borax am endgültigen Harz 0,05 bis 0,5 Gew.-% beträgt.

17. Verfahren nach einem der Ansprüche 1 bis 16, **dadurch gekennzeichnet, dass** nach dem Abstoppen der Kondensationsphase des Schrittes (c) das Reaktionsmedium bis auf eine Temperatur zwischen 50 und 80°C abgekühlt wird.

18. Verfahren nach einem der Ansprüche 1 bis 17, **dadurch gekennzeichnet, dass** im Schritt (e) das Reaktionsgemisch auf eine Temperatur von 20°C abgekühlt wird.

19. Verfahren nach einem der Ansprüche 1 bis 18, **dadurch gekennzeichnet, dass** im Schritt (e) das Wiedereinstellen des pH-Werts durch Zugabe mindestens eines basischen Mittels durchgeführt wird, das aus den Hydroxiden von Alkalimetallen in wässriger Lösung und den organischen Aminen ausgewählt ist.

20. Verfahren nach einem der Ansprüche 1 bis 19, **dadurch gekennzeichnet, dass** die Schritte (a) bis (e) derart durchgeführt werden, dass ein endgültiges Harz mit einem Trockenextrakt zwischen 60 und 70 Gew.-% erhalten wird.

21. Wässriges, stabiles Melamin-Harnstoff-Formol-Aminoplastharz mit einem Molverhältnis von Formol zu NH₂-Gruppen (F/NH₂) zwischen 0,3 und 0,6 und einem Anteil von Melamin, bezogen auf die Harz-Gesamtmasse, zwischen 10 und 16 Gew.-%, wobei das Harz durch das Verfahren nach einem der Ansprüche 1 bis 20 erhalten werden kann.

22. Verwendung des wässrigen Aminoplastharzes nach Anspruch 21 oder erhalten durch das Verfahren nach einem der Ansprüche 1 bis 20 als Klebstoff bei der Herstellung von Holzprodukten.

23. Holzwerkstoffe, die unter Verwendung des wässrigen Aminoplastharzes nach Anspruch 21 oder erhalten durch das Verfahren nach einem der Ansprüche 1 bis 20 als Klebstoff erhalten werden.
